Europäisches Patentamt

European Patent Office

Office européen des brevets

(11) Veröffentlichungsnummer : **0 074 063**
**B1**

(12) **EUROPÄISCHE PATENTSCHRIFT**

(45) Veröffentlichungstag der Patentschrift :
05.03.86

(21) Anmeldenummer : **82108003.3**

(22) Anmeldetag : **31.08.82**

(51) Int. Cl.⁴ : **B 01 J 20/28, A 43 B 17/10,**
**F 24 C 15/20, A 61 L 9/01**

(54) Verfahren zum Herstellen eines sorptiv wirkenden Körpers, insbesondere zur Geruchsbeseitigung, zur Raumbeduftung u.dgl.

(30) Priorität : 04.09.81 DE 3135025

(43) Veröffentlichungstag der Anmeldung :
16.03.83 Patentblatt 83/11

(45) Bekanntmachung des Hinweises auf die Patenterteilung : 05.03.86 Patentblatt 86/10

(84) Benannte Vertragsstaaten :
AT BE CH DE FR GB IT LI NL SE

(56) Entgegenhaltungen :
EP-A- 0 033 448
WO-A-81 /018 56
CH-A- 563 129
DE-A- 1 937 373
DE-C- 694 544
FR-A- 1 602 575
US-A- 2 819 491
US-A- 3 091 550
US-A- 3 813 347
US-A- 4 250 165
Die Akte enthält technische Angaben, die nach dem Eingang der Anmeldung eingereicht wurden und die nicht in dieser Patentschrift enthalten sind.

(73) Patentinhaber : COLLO GmbH
Simon-Arzt-Strasse 2
D-5303 Bornheim-Hersel (DE)

(72) Erfinder : Irgel, Lutz
Hangweg 12
D-5205 St.Augustin 1-Birlinghoven (DE)
Erfinder : Ehlenz, Peter
Im Herrengarten 9
D-5330 Königswinter 21 (DE)

(74) Vertreter : Koch, Theodor, Dipl.-Phys.
Koch Dr. Barth & Barth jr. Colmantstrasse 20
D-5300 Bonn 1 (DE)

**Beschreibung**

Das Patent betrifft ein Verfahren zum Herstellen eines sorptiv wirkenden Körpers, insbesondere zur Geruchsbeseitigung oder zur Raumbeduftung, wobei zumindest ein Teil einer feinteiligen Feststoffkomponente, die aus einem Sorptionsmittel besteht oder ein derartiges Mittel aufweist oder dieses im Gemisch enthält, mit einem oder mehreren flüssigen Sorbaten zusammengebracht und dann dieser Teil und der ggfls. vorhandene Rest der Feststoffkomponente mit einem Bindemittel vermischt wird, worauf dieses Gemisch durch das Bindemittel zu einem zusammenhängenden Gebilde fixiert wird oder ein Träger durch dieses Gemisch beschichtet und/oder durchtränkt wird, und das oder die Sorbate durch thermische Nachbehandlung des erhaltenen Gemisches aus diesem ausgetrieben wird bzw. werden, um dann das durch das Bindemittel fixierte Gebilde zur Geruchtsbeseitigung oder zur Raumbeduftung zu schaffen.

Die Erfindung ist ferner auf Erzeugnisse gerichtet, welche gem. dem erfindungsgemäßen Verfahren hergestellt und vor allem zur Geruchsbeseitigung bestimmt sind, wobei diese Erzeugnisse vorzugsweise als Geruchsfilter bzw. Filtermatten in Küchendunsthauben oder als Filtermatten und Raumluftverbesserer in Raumklimageräten und dergleichen oder als statisch arbeitende Raumbedufter und Frischduftspender sowie als Schuheinlegesohle und dgl. verwendbar sind.

Für Küchendunsthauben und sonstige Luftreinigungsgeräte verwendet man als Filtermittel körnige Filterstoffe, wie vor allem adsorptive Stoffe, (Aktivkohle und dergleichen) oder chemosorptive Stoffe.

Diese schüttfähigen Filterstoffe werden in Filterkassetten oder dergleichen gefüllt, welche im Luftweg der zu filternden Luft angeordnet werden, so daß die Luft die durchlässigen Filterkassetten und das in ihnen befindliche Schüttstoff-Filtermittel durchströmt. Aus der DE-A 24 22 574 sind Schüttstoff-Filtermittel bekannt, die aus einem Gemenge mindestens einer mit dem Fremdgas chemisch reagierenden sauren oder basischen chemosorptiven Substanz und einer feuchtigkeitsspeichernden Substanz bestehen. Letztere kann ein die chemosorptive Substanz in der Kornform abbindendes wasserlösliches Bindemittel sein.

Die mit einem Schüttstoff-Filtermittel arbeitenden Filterkassetten sind in der Fertigung verhältnismäßig teuer und haben außerdem den Nachteil, daß für die verschiedenartigen Küchendunsthauben oder sonstigen Filtergeräte Filterkassetten unterschiedlicher Formate zur Verfügung gestellt werden müssen. Hierdurch wird die Fertigung und auch die Lagerhaltung der Filterkassetten beträchtlich verteuert.

Bekannt sind auch Filterkörper, bei denen sorptive Stoffe in Pulver- oder Granulat-Form in einem Bindemittel eingelagert und mit Hilfe des Bindemittels in der gewünschten Form fixiert sind. Diese Filterkörper können z. B. als Preßformkörper hergestellt werden oder die Form von Filterplatten und Filtermatten haben. Nachteilig ist hier allerdings, daß die sorptiv wirkenden körnigen Stoffe von dem Bindemittel mehr oder weniger umhüllt werden, was einen erheblichen Verlust ihrer sorptiven Wirksamkeit zur Folge hat.

Die für bestimmte Moleküle gegebene sorptive Wirksamkeit läßt sich dabei insbesondere auch nicht für einzelne Moleküle erhalten oder sogar vergrößern.

So ist nach der DE-C 694 544 ein « Verfahren zur Verkittung oberflächenaktiver Massen » bekannt, bei welchem die Aktivstoffe (Sorptionsmittel) vor dem Vermischen mit einem in Lösungsmitteln gelösten Bindemittel mit einem gegen die Bestandteile des Bindemittels sich abstoßend verhaltenden und leicht wieder entfernbaren Adsorbendum beladen werden. Das Adsorbendum (Sorbat) soll dabei gem. diesem bekannten Verfahren erst nach der Verfestigung bzw. nach der Erhärtung der Kittmasse ausgetrieben werden.

Bei diesem Verfahren bilden sich dabei um die feinteiligen Bestandteile der Aktivstoffe äussere Schichten aus dem verfestigten Bindemittel, so daß die sorptive Wirksamkeit der Aktivstoffe erheblich eingeschränkt wird und ein derartiges Verfahren sich nur zur Herstellung von dünnschichtigen oberflächen-aktiven Körpern in Form von Folien und dergleichen eignet.

Gem. der US-A 3 813 347 ist ein Verfahren zur Herstellung eines mit Hilfe eines Bindemittels fixierten Filterkörpers bekannt, bei welchem das Sorptionsmittel (z. B. Aktivkohle) mit einem Sorbat beladen wird, wobei dann dieses Sorptionsmittel in einer « Matrix aus einem Plastikschaum » verteilt wird, wobei anschließend das Sorbat aus der Matrix bzw. dem Sorptionsmittel abgezogen wird.

Als Bindemittel wird dabei kein in Lösungsmitteln gelöstes Bindemittel verwendet, da gem. diesem Verfahren ein Schaumstoffkörper zur Bildung einer Matrix bzw. zur Verteilung der oberflächen-aktiven Substanzen in den Poren des Schaumstoffkörpers geformt und vulkanisiert werden soll. Eine Vermischung des die Matrix bildenden Schaumes mit dem Sorptionsmittel soll dabei nur in einem äußerst geringen Umfang erfolgen, so daß der Schaum nicht bricht. Insofern bildet sich nicht um einen Großteil der feinteiligen Partikel des Sorptionsmittels ein Bindemittelfilm aus.

Gem. der US-A 3 091 550 ist des weiteren ein Verfahren zur Herstellung eines Filterkörpers in Form von auf einem Träger fixierten oberflächenaktiven Stoffen bekannt, bei welchem das die Beschichtung bildende Sorptionsmaterial eine höhere Bruchfestigkeit und gleichzeitig weitgehend keinen Verlust seiner Filtereffektivität aufweisen soll.

Als Bindemittel soll dabei ein im Wasser unlösliches, oder ein im Wasser dispergiertes Bindemittel verwendet werden, wobei eine Emulsion aus dem Bindemittel und einem Sorbat herzustellen ist und dabei zu gewährleisten ist, daß durch das Sorbat der Dispersions- bzw. Emulsionskleber sich nicht absetzt. Die Emulsion aus Bindemittel, Sorptionsmittel und Sorbat soll dabei erst unterhalb der Absetztemperatur des Bindemittels getrocknet werden, also nachdem die Partikel des Sorptionsmittels durch das Bindemittel verklebt sind und das Bindemittel somit nicht mehr auf die noch mit dem Sorbat beladenen aktiven Oberflächen des Sorptionsmittels gelangen kann.

Die Aufgabe der vorliegenden Erfindung besteht nun darin, ein Verfahren der eingangs genannten Art, bei welchem sorptiv wirkende feinteilige Feststoffe mit Hilfe eines Bindemittels fixiert werden, so auszugestalten, daß sich bei einfacher und wirtschaftlicher Verfahrensweise gegenüber den bisher bekannten Verfahren zur Herstellung sorptiv wirkender Körper eine gesteigerte sorptive Wirksamkeit ergibt.

Dabei soll es möglich sein, daß der sorptiv wirkende Körper eine « gesteigerte sorptive Wirksamkeit » gegenüber dem zur Herstellung des sorptiv wirkenden Körpers verwendeten Sorptionsmittel für bestimmte Moleküle besitzt, welche ursprünglich für das eigentliche Sorptionsmittel nicht gegeben ist.

Diese Aufgabe wird nach dem erfindungsgemäßen Verfahren dadurch gelöst, daß das Bindemittel aus einem Lösungskleber besteht, welcher mit dem Verdampfen des Lösungsmittels bei einer Temperatur höher als die Verdampfungstemperatur des oder der Sorbate sich zu verfestigen beginnt, daß das Austreiben des Sorbates bereits während des Abbindens des Lösungsklebers erfolgt, und daß die Menge der Feststoffbestandteile des Lösungsklebers höchstens 30 % des Gewichtes der Teile des Sorptionsmittels ist und daß die Menge des aus dem Sorptionsmittel auszutreibenden Sorbates derartig gewählt ist, daß ein untereinander verbundenes, nach außen offenes System aus Poren und Kapillaren in dem verfestigten Bindemittel sich bildet.

Bei dem erfindungsgemäßen Verfahren wird dabei durch das auszutreibende Sorbat auf oder in dem Sorptionsmittel nicht nur die aktive Oberfläche des Sorptionsmittels vor einem Verkleben mit dem Bindemittel geschützt, und somit in dem Sorptionsmittel ein System von Poren und Kapillaren zur aktiven Oberfläche freigehalten-, sondern vielmehr wird durch das Austreiben des Sorbates durch das sich bereits verfestigende Bindemittel in diesem Bindemittel selbst ein System von Poren und Kapillaren angelegt, welche einen anderen Innendurchmesser und eine andere Struktur besitzen, als das System der Kapillare und Poren in dem Sorptionsmittel selbst.

Auf diese Weise ist es möglich, das Sorptionsvermögen und die Sorptionsart des Filterkörpers zu steuern und bewußt zu wählen, wobei das Sorptionsmittel bzw. die Sorptionsmasse als Preß-Körper formbar oder auf einem Träger aufbringbar ist. Dabei können die Sorbentien nach ihrer Fixierung durch das Bindemittel bzw. nach dem Verkleben mit dem Trägermaterial unter Ausnutzung der thermischen Desorption der Sorbate ihr Sorptionsvermögen nahezu vollständig wiedererlangen.

Es versteht sich, daß die Zeitdauer für das Austreiben des Sorbates umso kürzer ist, je höher bei der thermischen Nachbehandlung die Temperaturdifferenz zum Siedepunkt des Sorbates ist. Temperaturdifferenzen von etwa 20-40 °C sind zumeist ausreichend, obwohl sich mit höheren Temperaturdifferenzen kürzere Behandlungszeiten mit einem stärkeren kapillaren Aufreißen des Bindemittels erreichen lassen.

Wesentlich für die Bildung von Poren und Kapillaren in dem Bindemittel selbst und für die Erreichung einer möglichst hohen Filtereffektivität ist dabei, daß einerseits ein großer Prozentsatz des Sorptionsmittels gewählt und andererseits das Bindemittel (Feststoffbestandteile) prozentual gesehen gegenüber dem Sorptionmittel nur in einer relativ geringen Größe zugeführt wird, wobei zur Bildung einer geschlossenen Membrane um die Partikel des feinteiligen Sorptionsmittels ein flüssiges bzw. gelöstes Bindemittel benutzt werden muß, welches mit Verdampfen seines Lösungsmittels, erst nach dem Beginn des Austreibens des Sorbates, sich verfestigt.

Als Trägermaterial für das Gemisch aus Sorptionsmittel und Bindemittel können die hierfür üblichen Stoffe, wie vor allem synthetische Schaumstoffe, Vliesstoffe, Gewebe, Gewirke, Papier, Karton und dergleichen verwendet werden. Besonders geeignet sind poröse Trägerstoffe, insbesondere Faservliese, Schaumstoffmatten und dergleichen.

Für das Sorptionsmittel können ebenfalls die bekannten Stoffe eingesetzt werden. Vorzugsweise findet hier Aktivkohle Verwendung, obwohl auch andere adsorbierende feinteilige bzw. körnige Stoffe, wie vor allem Silika-Gel, Molekularsieb, Bentonit, Perlite, Bims, Infusorienede und dgl., Verwendung finden können. Auch die Verwendung chemosorptiver körniger Stoffe anstelle der adsorbierenden Stoffe oder zusätzlich zu diesen ist möglich.

Solche chemo-sorptiven Stoffe sind z. B. aus der vorgenannten DE-A 24 22 574 der Anmelderin bekannt.

Für das aus dem Gemisch auszutreibende Sorbat werden zweckmäßig flüssige Stoffe verwendet, deren Siedepunkt nicht höher liegt als 100 °C. Besonders geeignet sind Kohlenwasserstoffe, wie vor allem Alkohole, chlorierte Kohlenwasserstoffe, Fluorkohlenwasserstoffe, Esther oder Äthyl- oder Methylacetat und dergleichen. Als Sorbat kann mit Vorteil auch das Lösungsmittel des Bindemittels bzw. Klebers, wie vor allem Äthylacetat und dgl., eingesetzt werden. Für das Bindemittel selbst eigenen sich vor allem die wasserunlöslichen, synthetischen Kleber der bekannten Art, insbesondere Polyurethankleber.

Um eine möglichst durchgreifende Poren- u. Kapillarbildung beim Austreiben des Sorbats zu erhalten, sollte der Anteil des auszutreibenden Sorbats nicht zu gering gehalten werden. Vorzugsweise wird das Sorbat in einer Menge dem Gemisch zugesetzt, die mindestens etwa gleich dem Anteil der es adsorptiv aufnehmenden feinteiligen Feststoffkomponente bzw. des sorptiv wirkenden Stoffes ist.

Wie bereits dargelegt, sollte im Endprodukt der Anteil an Bindemitteln höchsten 30 % des Gewichtsanteils an adsorbierenden Stoffen (Sorptionsmittel) betragen, wobei ein Bindemittelanteil von nur 5- etwa 15 Gew.-% bevorzugt ist. Außerdem sollte im Endprodukt der Anteil an sorbierenden Stoffen gewichtsmäßig mindestens dem Gewichtsanteil des Trägerstoffes entsprechen.

Zusätzlich zu dem auszutreibenden Sorbat kann dem Gemisch noch mindestens ein Wirkstoff, vorzugsweise in flüssiger Form, zugesetzt werden, der im Gebrauch des Fertigerzeugnisses eine spezifische Funktion erfüllt. Dabei läßt sich das erfindungsgemäße Verfahren in der Weise durchführen, daß eine Teilmenge der feinteiligen Feststoffkomponente mit einem niedrigsiedenden Sorbat und eine andere Teilmenge der feinteiligen Feststoffkomponente mit mindestens einem demgegenüber höher siedenden Sorbat beladen wird, worauf die Teilmengen nach der Mischung mit dem Bindemittel einer thermischen Behandlung bei einer Temperatur unterworfen werden, die zwischen den Siedepunkten der beiden Sorbate liegt. Das erstgenannte, niedriger siedende Sorbat wird hier also zur Kapillarbildung des Bindemittels bei der thermischen Behandlung ausgetrieben, während das andere, höher siedende Sorbat als Wirkstoff eingelagert bleibt und im Gebrauch freigesetzt wird. Für das höher siedende Sorbat kann mit Vorteil ein Duftstoff, insbesondere Parfümöl, oder auch Menthol, Kampfer u. dgl. oder Lösungen eines Duft- oder Wirkstoffes in einem höher siedenden Lösungsmittel verwendet werden, welcher dem Fertigprodukt eine gewisse Duftnote verleiht und den Duft im Gebrauch über längere Zeit hinweg freisetzt. Solche Erzeugnisse lassen sich als Duftspender, zur Raumbeduftung oder auch zur Beduftung von Schränken u. dgl. einsetzen. Auch bei Verwendung des Erzeugnisses als Filtermatte bei Küchendunsthauben, Raumklimageräten u. dgl. ist die eingelagerte Duftstoffkomponente vorteilhaft, weil in diesem Fall die Filtermatte nicht nur eine geruchsvernichtende Wirkung, sondern zugleich auch eine den Raumgeruch überdeckende Beduftungswirkung hat. Die verschiedenen Sorbate können auch an denselben feinteiligen Feststoff, insbesondere Aktivkohle, angelagert werden. Andererseits kann das Gemisch aber auch unterschiedliche feinteilige bzw. feinstkörnige Feststoffe enthalten, wobei die eine Feststoffkomponente das auszutreibende, niedriger siedende Sorbat und die andere Feststoffkomponente das höher siedende Wirkstoffsorbat aufnimmt. Beispielsweise kann das Wirkstoffsorbat mit Vorteil an ein aus Hohlkörperpartikeln bestehendes, geblähtes oder geschäumtes Material, insbesondere Perlite oder ein sonstiges synthetisches Schaumstoff- oder Blähmaterial, angelagert sein. Dem höher siedenden Sorbat kann als Haftvermittler ein Tensid od. dgl. zugesetzt werden, um die dosierte Freigabe dieses Sorbats (z. B. Parfüm od. dgl.) im Langzeitgebrauch zu verbessern.

Das erfindungsgemäße Verfahren ist mit besonderem Vorteil für das Herstellen von Geruchsfiltermatten für Küchendunsthauben, Klimageräte und sonstige Raumluft-Filtergeräte geeignet ; es läßt sich aber auch für die Herstellung von Raumbeduftern u. dgl. einsetzen, bei denen die in der Luft vorhandenen Gerüche adsorptiv und/oder chemosorptiv gebunden und andererseits an die Luft laufend eine angenehm wirkende Geruchskomponente abgegeben wird, welche die unangenehmen Gerüche in der Luft überdeckt.

Nachfolgend werden einige Beispiele für die Durchführung des erfindungsgemäßen Verfahrens und die Herstellung von Erzeugnissen nach diesem Verfahren beschrieben (Mengenangaben in Gew.-%).

## Beispiel 1

Es wird ein Gemisch folgender Stoffe hergestellt :

Aktivkohle (gepulvert < 0,1 mm) als Sorptionsmittel
Äthylacetat (Siedebereich 75-77 °C) als Sorbat 500
Polyurethankleber in Form eines Polyesterpolyols mit 1,7-2,0 % Hydroxylgehalt zu 10 % gelöst in Äthylacetat 500
Härter für den Polyurethankleber, nämlich Polyisocyanat, 75-prozentig in Äthylacetat gelöst 50

Die gepulverte Aktivkohle wird in das als Sorbat verwendete Äthylacetat eingerührt. Dabei saugt sich die Aktivkohle mit dem Äthylacetat voll, wobei zugleich die Luft aus den Kapillaren der Aktivkohle ausgetrieben wird. Die mit dem Sorbat beladene Aktivkohle wird dann in den mit dem Härter versetzten Polyurethankleber eingerührt. Mit dem entstehenden Gemisch wird ein Trägerstoff ein- oder beidseitig beschichtet. Dies kann mit Hilfe einer Leimauftragsmaschine oder dadurch erfolgen, daß das Trägermaterial durch das Gemisch hindurchgezogen wird, worauf der mit dem Gemisch beschichtete Trägerstoff zwischen zwei Walzen abgequetscht wird.

Als Trägerstoff wird ein Faservlies, z. B. ein Hartvlies mit einem Gewicht von 300 g/m$^2$ und einer Dicke von 15 mm verwendet. Die Beschichtungsmenge beträgt ca. 5 kg/m$^2$. Der mit dem Gemisch beschichtete Trägerstoff wird anschließend in einem Trokkenraum oder einem Trockenkanal entweder bei 80-100 °C über ca. eine Stunde oder bei 120-150 °C bei ca. 10 Minuten Verweilzeit getrocknet. Bei dieser abschließenden thermischen Behandlung wird das in der Aktivkohle gespeicherte Sorbat (Äthylacetat) ausgetrieben und zugleich das Lösungsmittel (Äthylacetat) des Polyurethanklebers unter Aushärten desselben verdunstet. Es entsteht ein beschichtetes matten- bzw. plattenförmiges Erzeugnis, bei welchem die Aktivkohle in die Klebemittelschicht eingelagert ist, die durch die thermische Nachbehandlung und das Austreiben des Sorbates stark kapillar und porös ist. Der so hergestellte Aktivkohlefilter läßt sich als Filtereinsatz bei Küchendunstfiltern oder Raumklimageräten u. dgl. einsetzen und kann auf das jeweils benötigte Format zugeschnitten werden.

Beispiel 2

Das Beispiel 1 wird dahingehend abgeändert, daß mit dem angegebenen Gemisch anstelle des Vliesmaterials eine offenzellige, flexible Polyurethanschaumstoffmatte mit einem Raumgewicht von etwa 30-35 kg/m³ einer Dicke von ca. 15 mm und einer Porenzahl von ca. 15-20 ppi beschichtet wird. Man erhält nach der thermischen Nachbehandlung eine Filtermatte, die sich als Aktivkohlefilter bei Küchendunsthauben, Raumklimageräten u. dgl. einsetzen läßt.

Beispiel 3

Es wird ein Gemisch aus folgenden drei Komponenten A, B und C hergestellt :

Komponente A :
Aktivkohle (wie in Beispiel 1 als Sorptionsmittel) 300
Fluorkohlenwasserstoff (als auszutreibendes Sorbat, Siedepunkt ungefähr 22 °C) 300

Komponente B :
Polyurethankleber (wie in Beispiel 1) 500
Härter (wie in Beispiel 1) 50

Komponente C :
Feinkörnige Aktivkohle (Korngröße 0,1-0,5 mm) 100
Parfümol (z. B. Zitrone) 50
Nonylphenolpolyglykoläther (Tensid als Haftvermittler) 50

Der bei der Komponente C verwendete Nonylphenolpolyglykoläther hat die Aufgabe, den Austritt der Geruchsstoffe (Parfümöl) im Gebrauch zu verzögern, so daß das Erzeugnis die Geruchskomponente über längere Gebrauchsdauer hinweg abgibt. Dieses wachsartige Tensid wird mit dem Parfümöl versetzt und durch Erwärmen auf etwa 50-60 °C verschmolzen, worauf die Aktivkohle in die Schmelzflüssigkeit eingerührt wird. Die so erhaltene Komponente C wird dann zusammen mit der Komponente A in den Kleber (Komponente B) eingerührt. Das entstehende Gemisch kann dann auf ein Hartvlies gemäß Beispiel 1 oder auf eine Schaumstoffbahn gemäß Beispiel 2 aufgetragen werden, worauf die thermische Nachbehandlung gemäß Beispiel 1 zum Austreiben des Sorbats (Fluorkohlenwasserstoff) bei einer Temperatur durchgeführt wird, die um mindestens 20 °C höher liegt als die Siedetemperatur des Fluorkohlenwasserstoffes.

Man erhält eine beschichtete Trägerbahn, die sich mit Vorteil ebenfalls als Aktivkohlefilter bei Küchendunsthauben-Klimageräten u. dgl. verwenden läßt und bei der die eingelagerte Aktivkohle zur adsorptiven Vernichtung der Koch- bzw. Raumgerüche dient, während die eingelagerte Geruchskomponente zur Raumbeduftung bzw. als Geruchsüberdecker dient. Dieser Aktivkohlefilter hat demgemäß zugleich die Funktion eines Frischdufterzeugers.

Beispiel 4

Es wird ein Gemisch aus folgenden Komponenten hergestellt :

Komponente A :
Aktivkohle (wie in Beispiel 1) 250
Petrolbenzin (Siedepunkt 40-60 °C, als auszutreibendes Sorbat) 250

Komponente B :
Polyurethankleber (wie in Beispiel 1) 500
Härter für den Polyurethankleber (wie in Beispiel 1) 50

Komponente C :
Aktivkohle (feinkörnig ; Korngröße 0,1-0,5 mm) 250
Parfümöl (z. B. Lavendelöl) 125
Polyäthylenglykol (Molekulargewicht 20000) als Haftvermittler 125

In der Komponente C hat das Polyäthylenglykol dieselbe Funktion wie im Beispiel 3 der Nonylphenolpolyglykoläther. Es hat die Konsistenz eines Hartwachses und wird durch Erwärmen auf eine Temperatur von etwa 50-60 °C aufgeschmolzen und mit den weiteren Stoffen der Komponente C gemischt, bevor es mit der Komponente A und der Komponente B gemischt wird. Das so hergestellt Gemisch wird auf eine Schaumstoffbahn aus einem offenzelligen Polyurethanschaumstoff mit einer Dicke von ca. 20 mm als Oberflächenbeschichtung aufgetragen. Anschließend erfolgt die thermische Nachbehandlung zum Austreiben des Sorbats (Petrolbenzin) bei einer Temperatur von 80-100 °C.

Das Fertigprodukt eignet sich besonders zur Raumbeduftung und als Frischduftspender, in Kleider- und Wäscheschränken u. dgl.

## Beispiel 5

Es wird ein Gemisch aus folgenden Komponenten A, B und C hergestellt :

| | |
|---|---|
| Komponente A : | |
| Gepulverte Aktivkohle (wie in Beispiel 1) | 250 |
| Äthylacetat (wie in Beispiel 1) | 250 |
| | |
| Komponente B : | |
| Polyurethankleber (wie in Beispiel 1) | 500 |
| Härter (wie in Beispiel 1) | 50 |
| | |
| Komponente C : | |
| Parfümöl (z. B. Latschenkiefer) | 125 |
| Polyäthylenglykol (entsprechend Beispiel 4) | 125 |
| Aktivkohle (entsprechend Beispiel 4) | 250 |

Die Komponenten A, B und C werden, wie im Zusammenhang mit den Beispielen 3 und 4 angegeben, hergestellt und zu einem Gemisch verarbeitet. Mit diesem Gemisch wird ein spunbonded Polyestervlies mit einem Gewicht von ca. 250-300 $g/m^2$ und einer Schichtdicke von ca. 2 mm beschichtet, worauf die thermische Nachbehandlung bei einer Temperatur von 100 °C durchgeführt wird. Das so hergestellte beschichtete Flachmaterial kann dann auf das gewünschte Format zugeschnitten werden.

Das vorgenannte Erzeugnis ist besonders geeignet als Schuheinlegesohle, welche einerseits Schweißgerüche adsorptiv bindet und andererseits eine gewisse Geruchsüberdeckung über längere Zeit hinweg bewirkt.

## Beispiel 6

Mit dem in Beispiel 5 angegebenen Gemisch wird ein offenzelliger, flexibler Polyurethanschaumstoff mit einem Raumgewicht von ca. 25-30 $kg/m^3$, einer Porenzahl von ca. 30 ppi und einer Dicke der Schaumstoffbahn von ca. 5 mm beschichtet. Nach der thermischen Behandlung wird die beschichtete Schaumstoffbahn auf das gewünschte Format zugeschnitten.

Auch dieses Erzeugnis eignet sich besonders zur Verwendung als Schuheinlegesohle.

## Beispiel 7

Es wird ein Gemisch aus den Komponenten A, B und C wie folgt hergestellt :

| | |
|---|---|
| Komponente A : | |
| Aktivkohle (entsprechend Beispiel 1) | 250 |
| Äthylacetat (entsprechend Beispiel 1) | 250 |
| | |
| Komponente B : | |
| Polyurethankleber (entsprechend Beispiel 1) | 500 |
| Härter für Polyurethankleber (gemäß Beispiel 1) | 50 |
| | |
| Komponente C : | |
| Aktivkohle (unter 0,2 mm) | 250 |
| Parfümöl (beständig gegenüber quaternär Ammoniumverbindung) | 125 |
| Alkyldimethylammoniumchlorid | 25 |
| Nonylphenolpolyglykoläther | 125 |

In der Komponente C dient das Alkyldimethylammoniumchlorid als Fußpilzmittel. Die Herstellung des Gemisches erfolgt in der beschriebenen Weise, wobei das Gemisch zur Beschichtung oder Durchtränkung eines Faservlieses, wie insbesondere desjenigen nach Beispiel 5, verwendet wird. Die thermische Nachbehandlung erfolgt gem. Beispiel 5.

Das fertige Erzeugnis eignet sich ebenfalls zur Herstellung von Schuheinlegesohlen.

**0 074 063**

Beispiel 8

Es wird ein Gemisch aus den Komponenten A, B und C entsprechend Beispiel 7 hergestellt und auf eine dünne Schaumstoffbahn entsprechend Beispiel 6 aufgetragen, worauf die thermische Nachbehandlung durchgeführt wird. Das Fertigerzeugnis eignet sich hervorragend für die Herstellung von Schuheinlegesohlen ; es ist wirksam gegen Fußpilz.

Beispiel 9

Es wird ein Gemisch aus den Komponenten A, B und C wie folgt hergestellt :

Komponente A :
Aktivkohle (wie in Beispiel 1)                                                        100
Äthylacetat                                                                           100

Komponente B :
Polyurethankleber (wie in Beispiel 1)                                                 500
Härter für Polyurethankleber (gemäß Beispiel 1)                                        50

Komponente C :
Feinkörniges Perlitematerial (unter 0,5 mm)                                           100
Nonylphenolpolyglykoläther                                                            100
Parfümöl                                                                              300

Das Gemisch wird in der beschriebenen Weise hergestellt. Das Perlitematerial besteht aus einem fein zerkleinerten, mineralischen Hohlkörpermaterial, welches das Parfümöl im Gemisch mit dem Nonylphenolpolyglykoläther bevorzugt in seinen feinen Hohlräumen aufnimmt. Mit dem Gemisch wird z. B. ein Polyurethanschaumstoff, offenzellig mit einer Porenzahl von 10-15 ppi, ein- oder beidseitig beschichtet, worauf die thermische Nachbehandlung bei einer Temperatur von etwa 100-120 °C durchgeführt wird. Das erhaltene Produkt ist als Raumbedufter besonders geeignet.

Beispiel 10

Es wird ein Gemisch aus den Komponenten A, B und C wie folgt hergestellt :

Komponente A :
Aktivkohle (gemäß Beispiel 1)                                                         300
Äthylacetat                                                                           300

Komponente B :
Polyurethankleber (gemäß Beispiel 1)                                                  500
Härter für Polyurethankleber (gemäß Beispiel 1)                                        25

Komponente C :
Aktivkohle (gepulvert unter 0,3 mm)                                                    50
Parfümöl (z. B. Zitrone)                                                               25
Polyäthylenglykol (Molekulargewicht 20000)                                             25

Das Gemisch wird in der beschriebenen Weise hergestellt und zur Beschichtung einer Schaumstoffbahn aus einem offenzelligen Polyurethanschaumstoff mit einer Porigkeit von ca. 10-15 ppi verwendet, Nach erfolgter thermischer Nachbehandlung wird die Schaumstoffbahn auf das gewünschte Format zugeschnitten. Das Erzeugnis ist besonders geeignet als Frischhalte- und Frischduftspender für Kühl- und Küchenschränke u. dgl.

Mit Hilfe des erfindungsgemäßen Verfahrens lassen sich Erzeugnisse herstellen, die sowohl ausgeprägte adsorbierende Eigenschaften haben als auch gleichzeitig Wirkstoffe im Gebrauch weitgehend gleichmäßig desorbieren, wobei als Wirkstoffe bevorzugt ähterische Öle (Parfüm) oder auch andere, dem Verwendungszweck des Erzeugnisses entsprechende Wirkstoffe eingesetzt werden können. In allen Fällen ist die Temperatur der thermischen Nachbehandlung niedriger als der Siedepunkt des höher siedenden Wirkstoffes. Als Kleber werden, wie erwähnt, vorzugsweise an sich bekannte Polyurethankleber verwendet. Für das bei der thermischen Nachbehandlung auszutreibende Sorbat werden bevorzugt Kohlenwasserstoffe, insbesondere Fluorkohlenwasserstoffe, Alkohole (Methyl-, Äthyl-, Propylalkohole u. dgl.), Ester, Methylacetat, Äthylacetat, Ketone, Aceton, chlorierte Kohlenwasserstoffe, nämlich Äthylen- u. Methylenchlorid, eingesetzt, obwohl ggfls. auch Wasser verwendet werden kann. Im Endprodukt sollte der Anteil des Sorptionsmittels (insbesondere Aktivkohle) gewichtsmäßig mindestens

7

gleich dem Anteil an Trägerstoff sein, während der Anteil des Bindemittels höchstens 30 % des Gewichtsanteils des Sorptionsmittels, vorzugsweise 5-15 Gew.-% desselben, betragen sollte. Der Anteil des Wirkstoffes (insbesondere Parfüm) kann beliebig bis zur Sättigung des ihn aufnehmenden Sorptionsmittels variiert und dem jeweiligen Bedarf angepaßt werden.

Wie in den verschiedenen Beispielen angegeben ist, wird das Sorbat bevorzugt zur Beschichtung oder auch zur Durchtränkung eines Trägermaterials verwendet werden. Andererseits besteht aber auch die Möglichkeit, das Gemisch ohne Verwendung eines Trägermaterials zu verarbeiten. Hierbei wird das fließfähige Gemisch z. B. in eine Form gegossen und in dieser der thermischen Nachbehandlung unterworfen, bei der einerseits das Bindemittel aushärtet und andererseits das Sorbat unter Öffnen von Kapillarrissen in dem aushärtenden Bindemittel ausgetrieben wird.

In der Zeichnung sind schematisch verschiedene Ausführungsbeispiele des erfindungsgemäßen Erzeugnisses dargestellt.

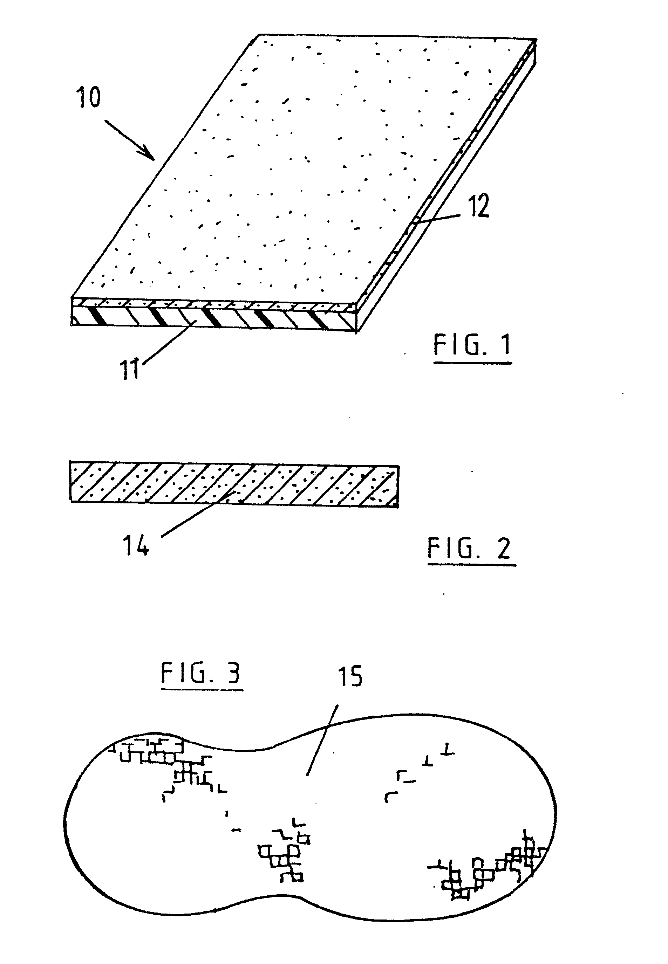

Fig. 1 zeigt in schematischer Darstellung eine Filtermatte 10, die aus einer beschichteten dünnen Schaumstoffmatte 11 aus offenzelligem Polyurethanschaumstoff besteht. Die Dicke der Schaumstoffmatte 11 beträgt z. B.10-20 mm. Die Schaumstoffmatte 11 trägt zumindest einseitig eine Beschichtung 12, deren Dicke kleiner ist als diejenige der Schaumstoffbahn 11, und z. B. 1-4 mm beträgt. Die Beschichtung 12 ist, wie im Zusammenhang mit den vorgenannten Beispielen, z. B. nach Beispiel 2, 4, 9 oder 10 hergestellt. Eine solche Matte läßt sich auf jedes gewünschte Gebrauchsformat zuschneiden. Das Sorptionsmittel (insbesondere Aktivkohle) ist mit Hilfe des Klebers fest an die Schaumstoffbahn 11 gebunden, so daß es beim Zuschneiden der Matte nicht aus dieser herausrieselt.

Fig. 2 zeigt schematisch ein erfindungsgemäßes Flächenerzeugnis, welches aus einem mit dem Gemisch durchtränkten Faservlies 14 besteht und z. B. nach Beispiel 5 hergestellt ist. Das mit dem Gemisch durchtränkte Faservlies 14 weist z. B. eine Dicke von 2 mm auf. Es kann nach der thermischen Nachbehandlung gemäß Fig. 3 als Schuheinlegesohle 15 zugeschnitten werden. Bei Verwendung des erfindungsgemäßen Erzeugnisses als Filtermatte in Küchendunsthauben oder Raumklimageräten u. dgl. mit Zwangsumwälzung der Luft muß die Matte selbstverständlich nach der Fertigstellung noch eine ausreichende Luftdurchlässigkeit aufweisen. Dies ist durch den verhältnismäßig geringen Anteil an Bindemittel in dem aufgebrachten bzw. eingebrachten Gemisch gewährleistet.

**Patentansprüche**

1. Verfahren zum Herstellen eines sorptiv wirkenden Körpers, insbesondere zur Geruchsbeseitigung oder zur Raumbeduftung, wobei zumindest ein Teil einer feinteiligen Feststoffkomponente, die aus einem Sorptionsmittel besteht oder ein derartiges Mittel aufweist oder dieses im Gemisch enthält, mit einem oder mehreren flüssigen Sorbaten zusammengebracht und dann dieser Teil oder der ggfls. vorhandene Rest der Feststoffkomponente mit einem Bindemittel vermischt wird, worauf dieses Gemisch durch das Bindemittel zu einem zusammenhängenden Gebilde fixiert wird oder ein Träger durch dieses Gemisch beschichtet und/oder durchtränkt wird, und das oder die Sorbate durch thermische Nachbehandlung des erhaltenen Gemisches aus diesem ausgetrieben wird bzw. werden, um dann das durch das Bindemittel fixierte Gebilde zur Geruchsbeseitigung oder zur Raumbeduftung zu schaffen, dadurch gekennzeichnet, daß das Bindemittel aus einem Lösungskleber besteht, welcher mit dem Verdampfen des Lösungsmittels bei einer Temperatur höher als die Verdampfungstemperatur des oder der Sorbate sich zu verfestigen beginnt, daß das Austreiben des Sorbates bereits während des Abbindens des Lösungsklebers erfolgt, und daß die Menge der Feststoffbestandteile des Lösungsklebers höchstens 30 % des Gewichtes der Teile des Sorptionsmittels ist, und daß die Menge des aus dem Sorptionsmittel auszutreibenden Sorbates derart gewählt ist, daß ein untereinander verbundenes, nach außen offenes System aus Poren und Kapillaren in dem verfestigen Bindemittel sich bildet.

2. Verfahren nach Anspruch 1, dadurch gekennzeichnet, daß als Sorptionsmittel mindestens einer der folgenden adsorptiv wirkenden Stoffe verwendet wird : Silicia-Gel, Molekularsieb, Bentonit, Perlite, Bims, Infusorienerde, Schaumstoffpulver, kapillaraktives Fasermaterial und Aktivkohle oder ein Gemisch einzelner dieser Stoffe, insbesondere Aktivkohle oder ein Gemisch damit.

3. Verfahren nach Anspruch 1 oder 2, dadurch gekennzeichnet, daß ein flüssiges Sorbat verwendet wird, dessen Siedepunkt nicht höher liegt als 100 °C.

4. Verfahren nach den Ansprüchen 1-3, dadurch gekennzeichnet, daß als Sorbat ein Kohlenwasserstoff, insbesondere ein Alkohol, wie z. B. Äthyl-, Methyl-, Propylalkohol, ein Ester, ein Keton, chlorierter Kohlenwasserstoff oder Fluorkohlenwasserstoff verwendet wird.

5. Verfahren nach einem der Ansprüche 1-4, dadurch gekennzeichnet, daß als Sorbat das Lösungsmittel des Bindemittels verwendet wird, z. B. Äthylacetat.

6. Verfahren nach einem der Ansprüche 1-5, dadurch gekennzeichnet, daß das Sorbat in einer Menge (Gew.-%) zugesetzt wird, die mindestens etwa gleich dem Anteil der es adsorptiv aufnehmenden feinteiligen Feststoffkomponente ist.

7. Verfahren nach einem der Ansprüche 1-6, dadurch gekennzeichnet, daß als Träger ein poröses Trägermaterial, vorzugsweise aus synthetischem Schaumstoff, aus einem Vliesstoff, einem Gewebe oder Gewirk verwendet wird.

8. Verfahren nach einem der Ansprüche 1-7, dadurch gekennzeichnet, daß als Bindemittel ein synthetischer Kleber, vorzugsweise ein Polyurethankleber mit einem Härter, verwendet wird.

9. Verfahren nach einem oder mehreren der Ansprüche 1-8, dadurch gekennzeichnet, daß eine Teilmenge der feinteiligen Feststoffkomponente mit einem niedrig siedenden Sorbat und eine andere Teilmenge der feinteiligen Feststoffkomponente mit mindestens einem dem gegenüber höher siedenden Sorbat als Wirkstoff beladen wird, worauf die Teilmengen nach der Mischung mit dem Bindemittel einer thermischen Behandlung bei einer Temperatur unterworfen werden, die zwischen den Siedetemperaturen der beiden Sorbate liegt.

10. Verfahren nach Anspruch 9, dadurch gekennzeichnet, daß für das höher siedende Sorbat ätherische Öle, insbesondere Parfümöl oder Lösungen eines Duftstoffes in einem Lösungsmittel verwendet werden.

11. Verfahren nach Anspruch 9 oder 10, dadurch gekennzeichnet, daß die Sorbate an denselben feinteiligen Feststoff, insbesondere Aktivkohle, angelagert werden.

12. Verfahren nach Anspruch 9 oder 10, dadurch gekennzeichnet, daß das höher siedende Sorbat an einem aus Hohlkörperpartikeln bestehenden, geblähten oder geschäumten körnigen Material, insbesondere Perlite, angelagert wird.

13. Verfahren nach einem der Ansprüche 9-12, dadurch gekennzeichnet, daß dem höher siedenden Sorbat ein Haftvermittler, insbesondere ein Tensid, wir vor allem Nonylphenolpolyglykoläther oder Polyäthylenglykol, zugesetzt wird.

14. Verfahren nach einem der Ansprüche 1-13, dadurch gekennzeichnet, daß die thermische Nachbehandlung bei einer Temperatur durchgeführt wird, die mindestens 20-40 °C höher liegt als der Siedepunkt des auszutreibenden Sorbates.

15. Verfahren nach einem der Ansprüche 1-14, dadurch gekennzeichnet, daß der Gewichtsanteil der Feststoffbestandteile des Bindemittels höchstens 5-15 % des Gewichtsanteiles des feinteiligen Sorptionsmittels beträgt.

16. Verwendung des nach dem Verfahren nach einem oder mehreren der Ansprüche 1-15 hergestellten Erzeugnisses als Filtermatte und/oder Raumluftverbesserer bzw. Frischluftspender, insbesondere bei Küchendunsthauben u. Raumklimageräten, wobei das in dem Bindemittel eingelagerte, vorzugsweise aus Aktivkohle bestehende körnige Sorptionsmittel an einem Träger (11, 14), vorzugsweise ein Faservlies oder eine Schaumstoffbahn (14), gebunden ist und ein Teil des Sorptionsmittels mit einem hochsiedenden Geruchsstoff, vorzugsweise Parfümöl, beladen ist.

17. Verwendung des nach dem Verfahren nach einem oder mehereren der Ansprüche 1-15 hergestellten Erzeugnisses als Schuheinlegesohle (15) wobei das in dem Bindemittel eingelagerte, vorzugsweise aus Aktivkohle bestehende feinteilige Sorptionsmittel an ein Trägermaterial, vorzugsweise ein Faservlies oder einen Schaumstoffzuschnitt, gebunden ist und ein Teil des Sorptionsmittels mit einem hochsiedenden Geruchsstoff, insbesondere Parfümöl, beladen ist.

18. Verwendung nach Anspruch 16 oder 17, wobei dem Geruchsstoff bzw. dem Parfümöl ein Tensid als Haftvermittler zugesetzt ist.

19. Verwendung nach Anspruch 17, wobei ein Teil des höher siedenden Sorbats ein gegen Fußpilz wirksames Mittel, wie z. B. Alkyldimethylammoniumchlorid, enthält.

20. Erzeugnis hergestellt nach einem oder mehreren der Verfahren 1-15, insbesondere hergestellt als Filtermatte, Raumluftverbesserer, Frischluftspender oder Schuheinlegesohle (15).

## Claims

1. Method of producing a sorptive body, especially for eliminating odours, providing air-freshening, and the like, in which at least a part of finely ground solid particles, — being a sorptive substance or containing it as compound or being a composition of such substances, is combined with one or several liquid sorbates, and in which then this part or the rest of the solid particles being not combined with a sorbate are mixed with an binding agent, and thereby in the following this mixture is fixed to a cohesive body or is coated and/or soaked to a carrier substance, and in which the liquid sorbate oder sorbates are expelled out of said shaped and/or supported mixture by applying heat to it, thus to produce a sorptive body being fixed by the binding agent for use in eliminating odours, air freshening, etc., whereby the binding agent comprising a settable binder composition in a liquid solvent, said binder composition being settable upon expulsion of said liquid solvent at a temperature higher than the boiling point of said sorbate or(s) so as to bind said solid particles together as a cohesive sorptive body, and that said expulsion of said sorbate from said solide particles occurs during the setting of said binder composition, and that the amount of the solid part of said binder composition not exceeding 30 % of the weight of said sorptive substance, and choosing such an amount of said sorbate expelled from said sorptive substance during setting of said binder composition providing a connected open system of pores and capillaries in said binder composition.

2. Method of producing a sorptive body in accordance with claim 1, whereby as sorptive substance there is used at least one of the following adsorptive materials : silica gel, a molecular sieve, bentonite, perlite, pumice stone, infusion earth, powdered foam material, capillary-active fibrous material and active carbon, or a composition of several of these adsorptive materials.

3. Method of producing a sorptive body in accordance with claim 1 or 2, whereby there is used a liquid sorbate whose boiling point is not higher than 100 °C.

4. A method of producing a sorptive body in accordance with claims 1, 2, 3, whereby as a sorbate there are used a hydrocarbon, an alcohol (e. g. ethyl, methyl, propyl alcohol), an ester, an ketone, chlorinated hydrocarbon or fluorocarbons.

5. A method of producing a sorptive body in accordance to claims 1-4, wheregy as sorbate there is used the solvent in the binding agent, e. g. ethyl acetate.

6. A method of producing a sorptive body in accordance with claims 1-5, whereby the sorbate is added in such an amount which — in percentage-weight terms — is approximately equal at least to that amount of the finaly-ground solid component into which it is adsorbed (in percentage terms of weight).

7. A method of producing a sorptive body in accordance with claims 1-6, whereby as said carrier material there is used a porous synthetic foam, fleece-like substance, or woven or spun fabric.

8. A method of producing a sorptive body in accordance with claims 1-7, whereby as binding agent there is used a synthetic adhesive, e. g. a polyurethane adhesive comprising a hardener.

9. A method of producing a sorptive body in accordance with claims 1-8, whereby there is added a sorbate with a low boiling point to a part of the finely-ground solid and there is at least also added one sorbate with a relatively higher boiling point to another part of the ground solid component ; after mixture with a binding material the two parts are subjected to heat treatment at a temperature between the boiling points of the two sorbates.

10. A method of producing a sorptive body in accordance with claim 9, whereby as a sorbate with a higher boiling point there is used an etherial oil, e. g. perfume oil, or a solvent containing a dissolved scent.

11. A method of producing a sorptive body in accordance with claim 9 or 10, whereby the same finely-ground solid component, e. g. active carbon, being used to take up both sorbates.

12. A method of producing a sorptive body in accordance with claim 9 or 10, whereby the higher-boiling sorbate being taken up into an expanded or foamed hollow-particled porous granular material such as perlite.

13. A method of producing a sorptive body in accordance with claims 9-12, whereby a substance is added which provides adhesion, e. g. the tensides nonylphenol-polygloco-ether or poly-ethylene glycol, to the sorbate with the higher boiling temperature.

14. A method of producing a sorptive body in accordance with claims 1-13, whereby the application of heat occurs at a temperature at least between 20 °C and 40 °C higher than the boiling point of the sorbate which is to be expelled.

15. A method of producing a sorptive body in accordance with claim 1-14, whereby the weight of the solid parts of the binding agent is not higher than 5-15 — in percentage-terms of weight of the finely ground sorptive substance.

16. A use of a product produced in a accordance with one or several of the claims 1-15 as a filter mat and/or an air purifier, expecially in kitchen extractor-hoods, air-conditioning devices, wherein the granular sorptive body, e. g. active carbon, taken up in the binding agent is fastened to a carrier (11, 14), e. g. a fibrous fleece, foam strip, and wherein a part of the granular sorptive substance is impregnated with an aromatice agent with a high boiling point, e. g. a perfume oil.

17. The use of a product made by a method in accordance to those of claims 1-15 as an inner sole of a shoe (15), wherein the granular sorptive substance, preferably active carbon, taken up in the binding agent, is fastened to a carrier, preferably a fibrous fleece or a foam cut-out ; a part of the sorptive substance is impregnated with an aromatic agent with a high boiling point, particularly a perfume oil.

18. The use of a product in accordance with claims 16 and 17 to whose aromatic agent or perfume oil there is added a tenside to cause cohesion.

19. The use of a product in accordance with claim 17 a part of whose higher-boiling sorbate contains a substance which effectively counters athlete's foot, e. g. alkyldimethyl ammonium chloride (a biocide substance).

20. The product manufactured in accordance with one or several of previous methods of claims 1-15, especially those products as a filter mat, an air purifier, an air-conditioning device and an inner sole of a shoe.

**Revendications**

1. Procédé de préparation d'un corps à activité de sorption, plus particulièrement pour combattre les mauvaises odeurs ou pour parfumer des pièces et locaux, suivant lequel on rassemble au moins une partie d'un constituant solide finement divisé, qui se compose d'un agent de sorption ou qui présente un agent de sorption de ce genre ou qui contient celui-ci en mélange avec un ou plusieurs sorbats liquides et on mélange ensuite cette partie et le reste éventuellement présent du constituant solide à un liant, après quoi le mélange ainsi formé est fixé en un produit cohérent par le liant ou bien un support est revêtu et/ou imprégné de ce mélange, et le ou les sorbats sont chassés du mélange ainsi obtenu par traitement thermique subséquent pour ainsi créer le produit fixé par le liant destiné à combattre les mauvaises odeurs ou à parfumer les pièces et locaux, caractérisé en ce que le liant se compose d'une colle en solution qui commence à se solidifier avec l'évaporation du solvant, à une température supérieure à la température d'évaporation du ou des sorbats, en ce que l'expulsion du sorbat s'effectue déjà au cours de la fixation ou prise de la colle en solution et en ce que la quantité des constituants solides de la colle en solution s'élève au plus à 30 % du poids des parties de l'agent de sorption et en ce que la quantité du sorbat à expulser de l'agent de sorption se choisit de telle manière qu'il se forme, dans le liant solidifié, un système de pores et de capillaires mutuellement liés et ouverts à l'extérieur.

2. Procédé suivant la revendication 1, caractérisé en ce qu'à titre d'agent de sorption, on utilise au moins l'une des substances à activité d'adsorption suivantes : gel de silice, tamis moléculaires, bentonite, perlite, pierre ponce, terre d'infusoires, de la mousse pulvérisée, une matière fibreuse à activité capillaire et des charbons activés, ou un mélange de certaines de ces substances individuelles, plus particulièrement des charbons activés ou un mélange des substances précitées avec ces charbons activés.

3. Procédé suivant l'une quelconque des revendications 1 et 2, caractérisé en ce que l'on utilise un sorbat liquide dont le point d'ébullition n'est pas supérieur à 100 °C.

4. Procédé suivant l'une quelconque des revendications 1 à 3, caractérisé en ce qu'à titre de sorbat, on utilise un hydrocarbure, plus particulièrement un alcool, tel que l'alcool éthylique, l'alcool méthylique ou l'alcool propylique, un ester, une cétone, un hydrocarbure chloré ou un hydrocarbure fluoré.

5. Procédé suivant l'une quelconque des revendications 1 à 4, caractérisé en ce qu'à titre de sorbat, on utilise le solvant du liant, par exemple l'acétate d'éthyle.

6. Procédé suivant l'une quelconque des revendications 1 à 5, caractérisé en ce que l'on ajoute le sorbat en une proportion (pourcentage pondéral) qui, au moins, est environ égale à la fraction de la composante solide finement divisée qui capte ou prend le sorbat par adsorption.

7. Procédé suivant l'une quelconque des revendications 1 à 6, caractérisé en ce qu'à titre de support, on utilise une matière de support poreuse, de préférence constituée d'une mousse synthétique, d'un mat ou d'une nappe, d'un tissu ou d'un tricot ou d'un tissu à mailles.

8. Procédé suivant l'une quelconque des revendications 1 à 7, caractérisé en ce qu'à titre de liant, on utilise une colle synthétique, de préférence une colle de polyuréthanne, avec un durcisseur.

9. Procédé suivant l'une quelconque des revendications 1 à 8, caractérisé en ce qu'on charge une proportion partielle de la composante solide finement divisée avec un sorbat à faible point d'ébullition et une autre proportion partielle de la composante solide finement divisée avec un sorbat à point d'ébullition supérieur au premier, et on soumet subséquemment des proportions partielles, après le mélange au liant, à un traitement thermique à une température qui se situe entre les points d'ébullition des deux sorbats.

10. Procédé suivant la revendication 9, caractérisé en ce qu'à titre de sorbat à point d'ébullition supérieur, on utilise des huiles éthérées, plus particulièrement des essences parfumées, ou des solutions d'un parfum dans un solvant.

11. Procédé suivant l'une quelconque des revendications 9 et 10, caractérisé en ce que l'on fixe les sorbats au même corps solide finement divisé, plus particulièrement du charbon activé.

12. Procédé suivant l'une quelconque des revendications 9 et 10, caractérisé en ce que l'on fixe le sorbat à point d'ébullition supérieur à une matière granulaire, expansée ou moussée ou gonflée par soufflage, se composant de particules de corps creux, plus particulièrement la perlite.

13. Procédé suivant l'une quelconque des revendications 9 à 12, caractérisé en ce que l'on ajoute au sorbat à point d'ébullition supérieur un agent conférant de l'adhésivité, plus particulièrement un agent tensioactif tel que, principalement, l'éther nonylphénolpolyglycolique ou le polyéthylène-glycol.

14. Procédé suivant l'une quelconque des revendications 1 à 13, caractérisé en ce que l'on réalise le traitement thermique subséquent à une température qui est au moins de 20 à 40 °C supérieure au point d'ébullition du sorbat à expulser ou chasser.

15. Procédé suivant l'une quelconque des revendications 1 à 14, caractérisé en ce que la proportion pondérale des constituants solides du liant atteint au maximum 5 à 15 % de la fraction pondérale de l'agent de sorption finement divisé.

16. Utilisation d'un produit fabriqué par mise en œuvre du procédé suivant l'une quelconque des revendications 1 à 15, à titre de mat filtrant et/ou d'agent d'amélioration de l'air de locaux ou de distributeur d'air frais, plus particulièrement pour des hottes d'aspiration de cuisines ou des appareils de climatisation de locaux, où l'agent de sorption granulaire, se composant de préférence de charbon activé, incorporé au liant, est lié à un support (11, 14), de préférence une nappe fibreuse ou un mat continu de matière plastique (14) et une partie de l'agent de sorption est chargée d'une substance odoriférante à point d'ébullition élevé, de préférence une essence parfumante.

17. Utilisation du produit préparé par mise en œuvre du procédé suivant l'une quelconque des revendications 1 à 15, à titre de semelles (15) à introduire dans les chaussures, où un agent de sorption finement divisé, constitué de préférence de charbon activé, incorporé au liant, est lié à un support, de préférence une nappe fibreuse ou une découpe de mousse, et une partie de l'agent de sorption est chargée d'une substance odoriférante à point d'ébullition élevé, plus particulièrement une essence parfumante.

18. Utilisation suivant l'une quelconque des revendications 16 et 17, où un agent tensioactif est ajouté à la substance odoriférante ou à l'essence parfumante à titre d'agent conférant de l'adhésivité.

19. Utilisation suivant la revendication 17, où une partie du sorbat à point d'ébullition élevé contient un agent actif contre les champignons des pieds, tels que, par exemple un chlorure d'alkyldiméthylammonium.

20. Produit obtenu par mise en œuvre du procédé suivant une ou plusieurs des revendications 1 à 15, plus particulièrement fabriqué sous la forme d'une nappe ou mat filtrant, d'un agent d'amélioration de l'air de locaux, de distributeur d'air frais ou de semelle à introduire dans les chaussures (15).

10

12

11

FIG. 1

14

FIG. 2

FIG. 3    15

1